Europäisches Patentamt

European Patent Office

Office européen des brevets

(19)

(11) **EP 0 889 466 B1**

(12) **FASCICULE DE BREVET EUROPEEN**

(45) Date de publication et mention
de la délivrance du brevet:
**25.08.2004 Bulletin 2004/35**

(51) Int Cl.7: **G11B 7/24**, G11B 7/00

(21) Numéro de dépôt: **98401627.9**

(22) Date de dépôt: **30.06.1998**

(54) **Support d'enregistrement optique a deux niveaux superposés, dispositif d'enregistrement et procédé de lecture correspondants**

Optisches Aufzeichnungsmedium mit zwei übereinander angeordneten Schichten, Aufzeichnungsgerät und Leseverfahren dafür

Optical recording medium with two superimposed layers, and corresponding recording device and method of reproduction

(84) Etats contractants désignés:
**DE GB IT**

(30) Priorité: **02.07.1997 FR 9708348**

(43) Date de publication de la demande:
**07.01.1999 Bulletin 1999/01**

(73) Titulaire: **COMMISSARIAT A L'ENERGIE ATOMIQUE**
**75015 Paris (FR)**

(72) Inventeurs:
• **Bruneau, Jean-Michel**
**38470 Vinay (FR)**

• **Bechevet, Bernard**
**38640 Claix (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 517 490        EP-A- 0 605 924**
**DE-A- 2 546 941**

• **PATENT ABSTRACTS OF JAPAN vol. 097, no. 003, 31 mars 1997 & JP 08 315415 A (RICOH CO LTD), 29 novembre 1996**

**Description**

**Domaine technique**

La présente invention a pour objet un support d'enregistrement optique à deux niveaux superposés, un dispositif d'enregistrement et un procédé de lecture correspondants. Ce support peut présenter une forme quelconque, mais dans la plupart des cas il s'agit d'un disque. L'invention s'applique à tout type d'enregistrement optique, qu'il s'agisse de lecture ou d'écriture, de techniques inscriptibles et/ou réinscriptibles.

L'invention trouve une application par exemple dans le domaine de l'industrie de l'enregistrement sur disque optique, par exemple pour un DVD-RAM de seconde génération à grande capacité d'enregistrement (de 2,6 à 40 Gigaoctets par disque).

**Etat de la technique antérieure**

On connaît essentiellement deux types de disques optiques : ceux qui utilisent le changement de phase d'un matériau solide (phase cristalline ou phase amorphe) et ceux qui utilisent les propriétés magnétooptiques de certains matériaux, notamment la rotation de polarisation d'un faisceau lumineux.

Les disques optiques à changement de phase font l'objet d'intenses recherches depuis de nombreuses années. Ces disques fonctionnent sur le principe selon lequel il est possible de faire passer, de façon réversible, un matériau d'un état amorphe à un état cristallin, selon l'intensité et la durée d'un spot laser qui lui est appliqué. Ce principe permet en outre une sur-écriture directe de nouvelles informations sur des informations déjà écrites.

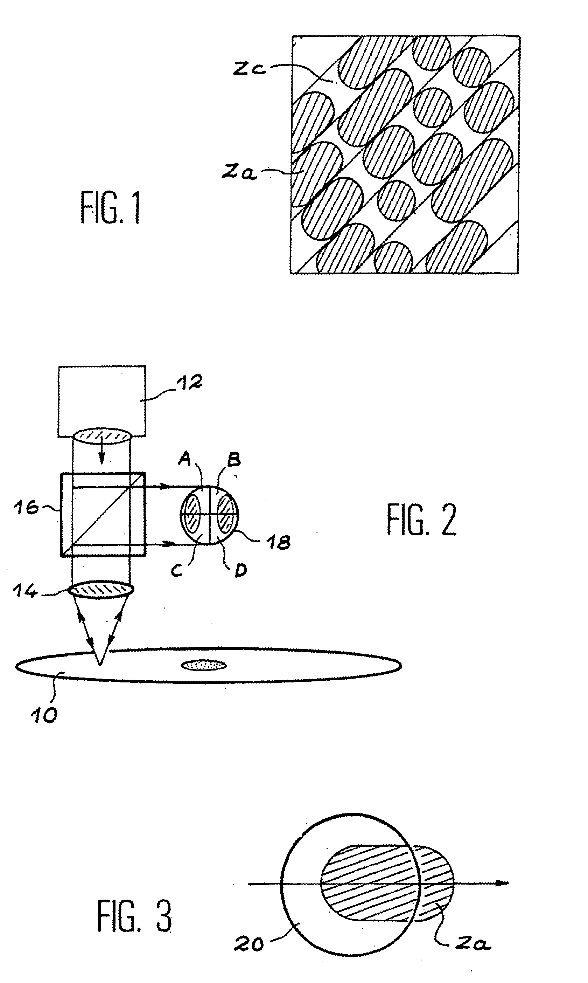

La zone d'enregistrement d'un disque à changement de phase se présente comme illustré sur la figure 1 annexée. On y voit des zones amorphes Za réparties entre des zones cristallines Zc, ces zones amorphes représentant l'information binaire enregistrée.

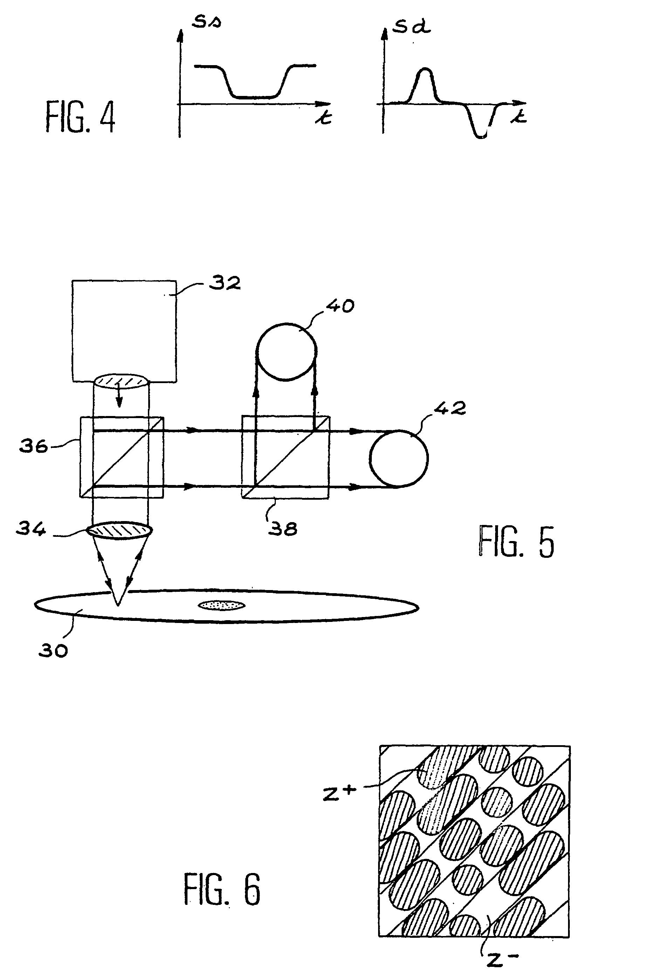

La lecture de ces informations s'effectue par voie optique. Un spot laser, en général guidé par un sillon, vient balayer la surface du disque et l'onde réfléchie est envoyée sur un système de détection. La figure 2 montre ainsi un disque 10 éclairé par un laser 12 à travers une lentille de focalisation 14. La lumière réfléchie passe par un cube séparateur 16. La pupille de sortie 18 recouvre un détecteur à plusieurs quadrants, en général à 4 quadrants A, B, C, D. Ce détecteur comprend en général des photodiodes (4 en l'occurrence).

La distribution d'intensité dans la pupille de sortie est fonction des coefficients de réflexion des zones amorphes et cristallines éclairées par le spot laser. Ces coefficients sont deux nombres complexes que l'on peut écrire :

$$\hat{r} = r.\exp j\phi$$

où $\hat{r}$ est le coefficient de réflexion en amplitude et $\phi$ la phase de l'onde réfléchie. La réflexion en intensité d'un faisceau lumineux sur le milieu est égale à $r^2$.

La figure 3 montre de manière plus détaillée la zone éclairée du disque. Le spot laser porte la référence 20. Il recouvre en partie une zone amorphe Za. Le déplacement relatif du spot par rapport à la zone Za s'effectue dans le sens de la flèche. En pratique le spot reste fixe et c'est le disque qui tourne. L'intensité et la phase de l'onde réfléchie vont dépendre des zones amorphe et cristalline illuminées, et vont donc varier lors du déplacement relatif du spot.

Deux modes de détection des informations enregistrées peuvent être alors envisagées :

a)Le mode de détection le plus classique, dans l'enregistrement optique à changement de phase, est un mode dit "somme" ("sum" en anglais), dans lequel on réalise la somme de l'intensité détectée par les quatre photodiodes disposées dans le détecteur à quatre quadrants. Ce signal somme Ss est représenté sur la partie gauche de la figure 4. Dans ce cas, l'information de différence de phase n'est pas prise en compte.

b) Dans un autre mode de détection, dit différentiel, on détermine la différence entre les signaux délivrés par deux groupes de deux photodiodes disposées de façon symétrique (ou plus généralement de deux groupes de N photodiodes). La forme de ce signal différentiel, soit Sd, est représentée sur la partie droite de la figure 4. Dans ce cas, le signal de lecture est proportionnel à la différence de phase entre les ondes réfléchies respectivement par les zones amorphes et par les zones cristallines illuminées par le spot de lecture. Ce mode de détection, contrairement au premier, est sensible au passage du spot d'une zone cristalline à une zone amorphe et change de signe pour une transition inverse. L'amplitude de la transition est proportionnelle à la quantité :

$$\Delta S = \frac{2\log 2}{\pi} |r_a||r_c| \sin(\phi_c - \phi_a)$$

où les indices a et c se rapportent aux états amorphe et cristallin.

On ne confondra pas le signal différentiel dont il vient d'être question avec un autre signal, employé également dans cette technique, et qui est obtenu lui aussi par différence et est appelé signal "push-pull". Ce signal n'est pas utilisé pour la détection des informations enregistrées mais sert à assurer le suivi de la piste à lire. Cette piste diffracte le faisceau laser incident et, lorsque celui-ci s'écarte légèrement de la piste, on observe un déséquilibre entre les intensités diffractées dans les ordres +1 et -1. C'est ce déséquilibre qui sert à produire un signal "push-pull" sur des photodiodes de réception appropriées.

Si l'on désigne par A, B, C et D les quatre signaux délivrés par un photodétecteur à quatre quadrants, le signal utilisé en lecture différentielle est la quantité (A+B)-(C+D) alors que le signal d'asservissement "push-pull" serait le signal (A+C)-(B+D).

Les valeurs des coefficients de réflexion en amplitude $r_c$ et $r_a$ provenant des zones cristallines et amorphes peuvent être ajustées en insérant le matériau à changement de phase dans un système interférentiel multicouche. La fonction de ces couches supplémentaires ne se limite pas à l'aspect optique, mais s'accompagne d'un rôle de protection. Elles influencent aussi la dynamique des phénomènes thermiques lors de l'enregistrement.

La lecture différentielle de disques à changement de phase est particulièrement intéressante pour deux raisons :

- elle permet d'abord une plus grande flexibilité de la structure du système de couches minces ; ceci permet d'envisager des empilements à haute transmission optique présentant tout de même des différences de phase et ainsi des signaux importants ;
- elle permet ensuite de produire de forts signaux sur un simple niveau [1].

Cependant, cette technique de lecture n'a guère été développée jusqu'à présent car elle s'écarte de la technique usuelle adoptée pour les disques optiques de la génération précédente (dits "compact-discs"), technique qui est celle de la lecture en mode "somme".

Il est vrai que la technique différentielle présente un inconvénient. Dans le cas de l'enregistrement optique à changement de phase, il est particulièrement difficile de contrôler avec exactitude la longueur de la zone enregistrée (il existe une fluctuation appelée "jitter"), ce qui entraîne une dégradation du spectre du signal différentiel. Cependant, des solutions pour remédier à cet inconvénient ont été proposées [2].

Quant aux signaux de lecture des disques magnétooptiques, ils proviennent, eux, d'une rotation de polarisation du faisceau de lecture après réflexion sur le support. Cette rotation est fonction de la direction d'aimantation des domaines illuminés par le spot laser. La technique magnétooptique est, à l'heure actuelle, la seule qui nécessite des optiques polarisées. Les signaux lus sont aussi de nature différentielle, mais à la différence de l'enregistrement à changement de phase, le signal est obtenu par deux photodiodes supplémentaires, qui découplent les deux directions de polarisation.

La figure 5 montre le dispositif de lecture correspondant. Le disque 30 est encore éclairé par un laser 32 à travers une lentille de focalisation 34. Un cube séparateur 36 renvoie la lumière réfléchie par le disque vers un autre cube séparateur 38, qui permet de séparer les polarisations. La composante de polarisation parallèle vient frapper un premier détecteur 40 tandis que la composante de polarisation perpendiculaire vient frapper un second détecteur 42.

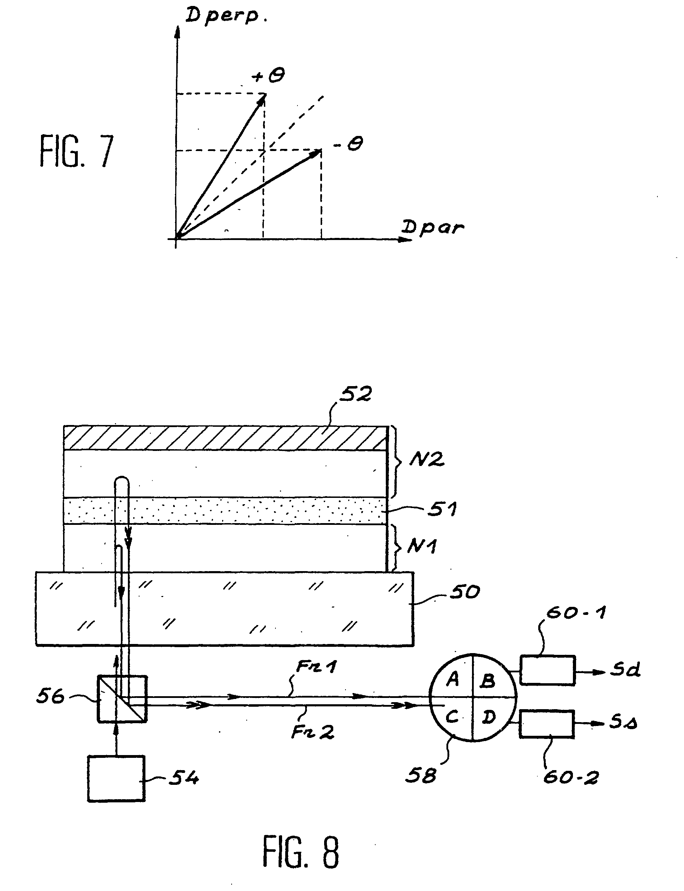

Quant au disque lui-même, ses zones se répartissent comme illustré sur la figure 6, en zones d'aimantation positive $Z^+$ où la rotation de la polarisation est positive ($+\theta$) et en zones d'aimantation négative $Z^-$ où la rotation de la polarisation est négative ($-\theta$).

Dans ces conditions, la différence entre les signaux reçus par les deux détecteurs 40 et 42 est proportionnelle à la projection de la composante de polarisation de la lumière réfléchie par le disque sur la direction perpendiculaire, à laquelle on soustrait celle de la direction parallèle. C'est ce qui est schématisé sur la figure 7, où la direction parallèle Dpar est portée en abscisses et la direction perpendiculaire Dperp en ordonnées. Les angles $+\theta$ et $-\theta$ sont comptés par rapport à la bissectrice.

De nombreuses solutions ont été proposées ou sont encore à l'étude pour accroître la densité d'enregistrement des disques optiques. Pour la technologie à changement de phase, les améliorations les plus marquantes concernent des techniques d'enregistrement sur les parties hautes et basses du sillon, ce qui permet de multiplier la densité par deux [3]. De nombreuses études sont aussi en cours pour, d'une part, réduire la longueur d'onde des lasers utilisés, et, d'autre part, diminuer les épaisseurs des substrats afin de pouvoir augmenter l'ouverture numérique de la lentille de focalisation [4]. Ces deux améliorations conduisent à une réduction de la taille de la tache laser sur le disque. Malheureusement, les progrès dans la réalisation de diodes laser à courte longueur d'onde sont lents.

Diverses techniques de gravure et de moulage du sillon de guidage du spot laser permettent d'espérer une diminution du pas de la spirale et une amélioration de son état de surface [5].

Dans cette recherche de haute densité d'enregistrement, la technologie des disques optiques à changement de phase se heurte à une difficulté liée à la limitation des vitesses de cristallisation des matériaux utilisés, contrairement aux matériaux magnétooptiques pour lesquels le basculement de l'aimantation est beaucoup plus rapide. Pour cette dernière technique, l'augmentation de densité passe par des techniques similaires, mais il existe des améliorations spécifiques telles que la juxtaposition de diverses couches actives permettant des techniques de masquage, de loupe magnétique et de surécriture directe.

On peut ajouter que, pour la future génération des disques compacts et dérivés (appelée disques DVD), certains laboratoires se dirigent vers une solution à double face par collage de deux disques l'un sur l'autre. Cela nécessite le retournement du support et la réalisation d'un dispositif de lecture double. Pour l'instant, des capacités de l'ordre de 5 Gigaoctets ont été obtenues, ce qui correspond à l'enregistrement d'un film d'un peu plus de deux heures en format MPEG2.

La présente invention vise encore à augmenter la capacité d'enregistrement de ces supports optiques en doublant cette capacité, mais en évitant les inconvénients susmentionnés.

Le document [6] décrit un système de stockage d'informations à plusieurs plans et un support d'enregistrement utilisable dans un tel système. Le support d'information peut posséder deux niveaux où les informations sont enregistrées de deux manières différentes. Un même faisceau optique vient lire ces deux niveaux. Deux voies de mesures différentes sont prévues, l'une travaillant avec un signal somme, l'autre avec un signal différentiel.

La présente invention propose un moyen original et performant de ce type dans lequel les modes de lecture des deux niveaux sont particuliers.

**Exposé de l'invention**

De façon précise, la présente invention a pour objet un support d'enregistrement optique, comprenant un premier niveau d'enregistrement et un second niveau d'enregistrement superposé au premier,et des moyens de lecture de ces deux niveaux par un même faisceau optique mais sur des principes différents, caractérisé par le fait que la lecture du premier niveau est fondée sur le principe d'une modulation de phase du faisceau optique et la lecture du second niveau est fondée sur le principe d'une modulation d'intensité dudit faisceau optique.

Les deux niveaux d'enregistrement fonctionnent soit avec des couches actives à changement de phase, soit avec des couches actives magnétooptiques.

De préférence, le premier et le second niveau d'enregistrement comprennent un empilement de couches minces avec une couche active intercalée entre deux couches diélectriques.

Comme les moyens de lecture sont classiques, l'invention ne nécessite aucune modification importante de la technique des lecteurs de disques optiques habituels, ce qui est un atout industriel et commercial considérable.

La présente invention (voir les revendications 1, 9 et 10) a également pour objet un dispositif d'enregistrement optique, comprenant :

- un support d'enregistrement avec un premier niveau d'enregistrement et un second niveau d'enregistrement superposé au premier,
- des moyens pour éclairer lesdits premier et second niveaux, le second niveau d'enregistrement étant éclairé à travers le premier,
- des moyens de lecture aptes à recevoir la lumière réfléchie par le premier niveau et par le second niveau, ces moyens comprenant au moins deux photorécepteurs, un premier canal apte à former la différence des signaux délivrés par les photorécepteurs et un second canal apte à former la somme des signaux délivrés par les détecteurs,

caractérisé par le fait que la lecture du premier niveau est fondée sur le principe d'une modulation de phase du faisceau réfléchi, le premier canal délivrant le signal différentiel restituant l'information enregistrée dans ce premier niveau et par le fait que la lecture du second niveau est fondée sur le principe d'une modulation d'intensité du faisceau réfléchi, le second canal délivrant le signal somme restituant l'information enregistrée dans ce second niveau.

La présente invention a également pour objet un procédé de lecture d'un support d'enregistrement optique comprenant un premier niveau d'enregistrement et un second niveau d'enregistrement superposé au premier, on lit ces deux niveaux par un même faisceau optique, ce faisceau se trouvant modulé par chaque niveau, la lecture des deux niveaux étant fondée sur deux types de modulation différentes, caractérisé par le fait que la lecture du premier niveau est fondée sur une modulation de phase du faisceau et que la lecture du second niveau est fondée sur une modulation d'intensité du faisceau.

**Brève description des dessins**

- la figure 1, déjà décrite, représente des zones amorphes enregistrées dans une matrice cristalline sur un disque à changement de phase ;
- la figure 2, déjà décrite, représente le schéma de principe d'un dispositif de lecture-écriture d'un disque optique à changement de phase ;
- la figure 3, déjà décrite, montre une zone amorphe lue par un spot laser ;
- la figure 4, déjà décrite, représente l'allure des signaux émis par les canaux somme et différence lors du passage d'un spot laser de lecture sur une zone enregistrée amorphe sur fond cristallin, dans un disque à changement de phase ;
- la figure 5, déjà décrite, est un schéma de principe d'un lecteur de disque magnétooptique;
- la figure 6, déjà décrite, représente des zones d'aimantation enregistrées sur un disque magnétooptique ;
- la figure 7, déjà décrite, montre le principe de lecture d'une rotation de polarisation pour un disque magnétooptique ;
- la figure 8 illustre un support d'enregistrement selon l'invention ;
- la figure 9 illustre un exemple de niveau d'enregistrement pour lequel le signal lu est optimisé sur le canal différentiel ;
- les figures 10A et 10B présentent la variation de la différence de phase entre les ondes lumineuses réfléchies respectivement par les zones amorphes et cristallines, en fonction des épaisseurs des couches utilisées.

**Exposé détaillé de modes de réalisation**

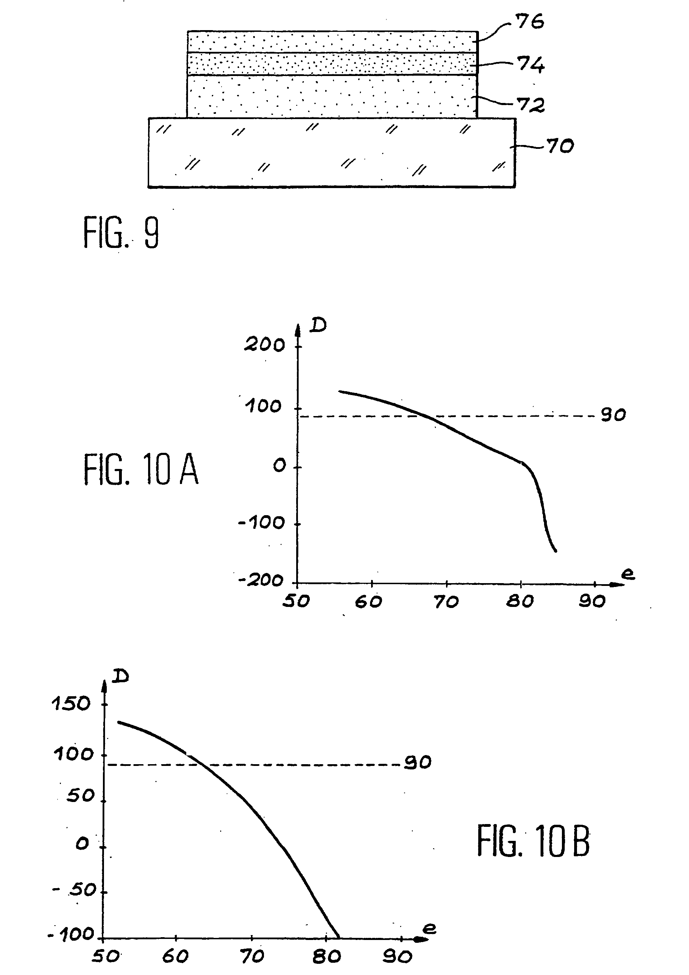

On voit, sur la figure 8, un support d'enregistrement conforme à l'invention. Ce support comprend un substrat transparent 50, un premier niveau d'enregistrement N1, un espaceur transparent 51, un second niveau d'enregistrement N2 comprenant une couche réfléchissante 52.

Ce support travaille, en lecture, à l'aide de moyens qui comprennent un laser 54 éclairant les deux niveaux d'enregistrement (le second, N2, étant éclairé à travers le premier, N1), un cube séparateur 56, un ensemble de photodétection 58, par exemple à quatre quadrants (A, B, C, D) et à quatre photodétecteurs. Cet ensemble reçoit un premier faisceau réfléchi Fr1 provenant du premier niveau N1 et un second faisceau réfléchi Fr2 provenant du second niveau N2. Les moyens de lecture comprennent encore un premier canal 60-1 travaillant en technique différentielle, et apte à délivrer un signal différentiel Sd et un second canal 60-2, travaillant en technique "somme", et apte à délivrer un signal somme Ss.

Selon l'invention, le premier niveau travaille en modulation de phase, et le signal Sd restitue l'information enregistrée dans le premier niveau. Le second niveau travaille en modulation d'intensité de sorte que c'est le signal Ss qui restitue l'information correspondante. Comme les deux modulations sont différentes, il n'y aura pas d'interaction entre les deux informations lues.

La figure 9 montre un exemple d'empilement de couches pouvant constituer le premier niveau. On y voit, sur un substrat transparent 70, une première couche diélectrique 72, une couche active 74 en matériau à changement de phase et une seconde couche diélectrique 76.

Pour un niveau enregistrable à changement de phase dans lequel le signal différentiel est optimisé, on peut adopter, par exemple, des couches dont les propriétés, pour une longueur d'onde de 685 nanomètres, sont les suivantes, où n est la partie réelle de l'indice complexe et k la partie imaginaire :

|  | n | k |
|---|---|---|
| Substrat transparent (70) | 1,58 | 0 |
| Couches diélectriques (72,76) | 2,15 | 0 |
| Etat amorphe : | 3,71 | 1,63 |
| Etat cristallin : | 3,95 | 4,12 |
| Matériau à changement de phase (74) : | de type GeSbTe | |

Il existe des combinaisons de ces trois couches optiques pour lesquelles le signal différentiel est optimisé (la différence entre la phase de l'onde réfléchie des zones cristallisées et la phase de l'onde réfléchie des zones amorphes est égale à 90°).

Lorsque l'indice de la couche diélectrique 76 est supérieur à l'indice du milieu de sortie, il est possible de classer ces solutions en deux types :

- des solutions à couche diélectrique 76 de forte épaisseur (autour de 100 nanomètres),
- des solutions à couche diélectrique 76 de faible épaisseur (quelques nanomètres).

Les figures 10A et 10B donnent les différences de phase D exprimées en degrés calculées pour une épaisseur de matériau à changement de phase GeSbTe de 20 nanomètres en fonction de l'épaisseur de la première couche diélectrique (72). Pour la figure 10A, l'épaisseur de la seconde couche diélectrique est de 5 nm tandis que pour la figure 10B elle est de 130 nm.

L'avantage d'un niveau d'enregistrement comme celui décrit sur la figure 9 réside dans le fait qu'il ne comporte pas de couche réflectrice et permet donc d'ajouter un second niveau. Ce second niveau peut être enregistrable une fois ou réenregistrable, de type à changement de phase (lecture sur voie somme), ou magnétooptique (lecture sur voie différentielle magnétooptique). La transmission d'un tel premier niveau est contrôlable (en conservant une rotation de phase de 90°) en agissant surtout sur l'épaisseur du matériau à changement de phase et sur la différence des indices entre le milieu de sortie (généralement l'espaceur) et le diélectrique 76.

Pour ce qui est du second niveau, il peut être constitué par un empilement inscriptible ou réinscriptible. Si l'on opte pour la technologie à changement de phase, on choisira des couches minces optimisant les variations de réflexion selon que le matériau est amorphe ou cristallin, afin d'obtenir un bon signal somme sur le canal somme (canal 60-2 sur la figure 8).

A titre d'exemple de second niveau à forte modulation d'intensité, on peut utiliser trois couches dont les épaisseurs $e$ sont données dans le tableau suivant, où les indices 1 et 2 correspondent à la première et à la seconde couche diélectrique, l'indice $a$ à la couche active et l'indice $al$ à l'aluminium supposé terminer le second niveau, la quantité $\Delta R$ étant la différence de réflectivité entre les zones amorphes et cristallines :

| $e_1$ | $e_a$ | $e_2$ | $e_{al}$ | $\Delta R$ |
|---|---|---|---|---|
| 155 | 27,5 ($Ge_{23,1}Sb_{22,1}Te_{54,8}$) | 17,5 | 150 | 34,7 |
| 152,5 | 25 ($Ag_{11,7}In_{7,4}Sb_{55}Te_{25,9}$) | 10 | 150 | 16,3 |
| 40 | 25 ($In_{50}Sb_{16,7}Te_{33,3}$) | 72,5 | 150 | 15,4 |

Pour illustrer encore l'invention, on peut donner un exemple précis de réalisation pour une application de type DVD. Le premier niveau d'enregistrement est conforme au premier exemple et le second niveau conforme au second exemple qui viennent d'être décrits. On a alors la succession des matériaux suivants déposés sur un substrat transparent :

| Nature du matériau | Indice optique (n/k) à 685 nanomètres | Epaisseur (nanomètres) |
|---|---|---|
| Niveau 1 | | |
| Couche diélectrique $(ZnS)_{80}((SiO_2)_{20}$ | (2,1/0) | 65 |
| Couche de matériau à changement de phase $Ge_{23,1}Sb_{22,1}Te_{54,8}$ | (3,71/1,63) amorphe (3,95/4,12) cristallin | 20 |
| Couche diélectrique $(ZnS)_{80}(SiO_2)_{20}$ | (2,1/0) | 130 |
| Niveau 2 | | |
| Couche diélectrique $(ZnS)_{80}(SiO_2)_{20}$ | (2,1/0) | 152,5 |
| Couche de matériau à changement de phase $Ag_{11,7}In_{7,4}Sb_{55}Te_{25,9}$ | (3,89/2,32) amorphe (3,48/3,36) cristallin | 25 |
| Couche diélectrique $(ZnS)_{80}(SiO_2)_{20}$ | (2,1/0) | 10 |

L'espaceur peut être constitué par tout matériau transparent, par exemple de la silice. Son épaisseur peut être de 50 microns par exemple.

Le tableau suivant donne les trois cas possibles pour chaque niveau. La totalité des neuf combinaisons que l'on peut réaliser à partir de ce tableau est envisageable, dès lors que la nature du niveau 1 choisi permet une lecture différentielle :

| Niveau 1 | Niveau 2 |
|---|---|
| lecture différentielle | lecture somme |
| pré-enregistré inscriptible réinscriptible | pré-enregistré inscriptible réinscriptible |

Par pré-enregistrées, on désigne des informations qui sont gravées directement sur le substrat, ou sur tout autre support obtenu à partir d'une réplication, et qui peuvent nécessiter l'adjonction de couches optiques pour être convenablement lues.

Par inscriptible, on désigne des systèmes de couches optiques sur lesquelles l'information écrite ne peut être effacée, tels que les empilements comportant des matériaux dits polymères colorants ("dye polymer"), ou tout autre matériau pour lequel les propriétés optiques sont modifiées par l'application d'une impulsion laser. Il est à noter qu'un niveau réinscriptible peut être utilisé à la manière d'un niveau inscriptible.

Par réinscriptible, on désigne des niveaux comportant, par exemple, des matériaux magnétooptiques ou à changement de phase ou bien tout autre matériau pour lequel l'information n'est pas écrite de façon permanente et peut être effacée.

Les divers composants du support qui vient d'être décrit peuvent être réalisés en trois temps :

### 1) Réalisation d'un substrat transparent :

Les procédés de fabrication de substrats transparents sont maintenant bien connus dans l'industrie du disque optique :

a)matrice : la matrice qui va permettre la réplication des substrats est obtenue après plusieurs étapes de galvanoplastie à partir d'une gravure originale obtenue par ablation laser d'une couche photosensible ; cette matrice peut comporter, hormis le sillon de guidage, des informations non effaçables ;

b)substrats plastiques : ils sont obtenus par moulage d'un polymère sur la matrice ;

c)substrats en verre : ils sont obtenus par gravure d'une résine transparente déposée sur un substrat de verre plat.

### 2) Réalisation des couches minces :

Les couches minces peuvent être réalisées de diverses façons, par pulvérisation cathodique, évaporation, ablation laser sur une ou plusieurs cibles ou bien par dépôt par centrifugation. Ces procédés de dépôt peuvent nécessiter l'introduction d'un gaz dans les enceintes de dépôt, lequel pourra être réactif ou bien constituer un dopant des couches réalisées.

La nature des couches utilisées dépend de la technologie utilisée dans le niveau d'enregistrement considéré. A titre d'exemple, le brevet US-5 289 453 décrit des couches diélectriques, des matériaux à changement de phase et des réflecteurs, qui sont couramment utilisés pour l'enregistrement optique à changement de phase.

### 3) Réalisation de l'espaceur et de la résine de protection :

a)espaceur : il peut être réalisé en résine photopolymérisable ou en matériau diélectrique ,

b)une résine de protection peut être ajoutée sur la face supérieure du disque ; cette résine peut être constituée d'un polymère photopolymérisable sous un rayonnement ultraviolet.

La description qui précède porte sur un support avec un substrat dont une seule face est recouverte par l'empilement des deux niveaux d'enregistrement. Il va de soi que l'invention est plus générale et couvre aussi le cas où le substrat aurait chacune de ses faces recouverte par un tel empilement. Le support serait ainsi à double face.

# EP 0 889 466 B1

## Références

[1] Chubing PENG et M. MANSURIPUR, Technical Digest, ODS 1997, TuA3, pp. 32-33.
[2] Tatsunori IDE et Mitsuya OKADA, Appl. Phys. Lett. 64 (13), pp. 1613-1614.
[3] Takeo OHTA et al., Optoelectronics-Devices and Technologies, vol. 10, n°3, pp. 361-380.
[4] Takeo OHTA et al., Jpn. J. Appl. Phys., vol. 32 (1993) Part 1, n°11B, pp. 5214-5218.
[5] Seiji MORITA et al., Technical Digest ODS 1997, WB2, pp. 92-93.
[6] EP-A-0 605 924

## Revendications

1. Support d'enregistrement optique, comprenant un premier niveau d'enregistrement (N1) et un second niveau d'enregistrement (N2) superposé au premier, et des moyens de lecture de ces deux niveaux par un même faisceau optique mais sur des principes différents, **caractérisé par le fait que** la lecture du premier niveau (N1) est fondée sur le principe d'une modulation de phase du faisceau optique et la lecture du second niveau (N2) est fondée sur le principe d'une modulation d'intensité dudit faisceau optique.

2. Support d'enregistrement selon la revendication 1, dans lequel le premier niveau (N1) et le second niveau (N2) d'enregistrement comprennent une couche active de type à changement de phase.

3. Support d'enregistrement selon la revendication 1, dans lequel le premier niveau (N1) et le second niveau (N2) d'enregistrement comprennent une couche active de type magnéto-optique.

4. Support d'enregistrement selon la revendication 1, dans lequel chaque niveau d'enregistrement (N1, N2) comprend une couche active (74) encadrée par deux couches diélectriques (72, 76).

5. Support d'enregistrement selon la revendication 1, dans lequel les deux niveaux d'enregistrement (N1, N2) sont séparés par un espaceur transparent (51).

6. Support d'enregistrement selon la revendication 1, dans lequel le premier niveau d'enregistrement (N1) repose sur un substrat transparent (50).

7. Support d'enregistrement selon la revendication 1, dans lequel le second niveau d'enregistrement (N2) est recouvert d'une couche réfléchissante (52).

8. Support d'enregistrement selon l'une quelconque des revendications 1 à 7, comprenant un substrat (50) avec deux faces, chaque face étant recouverte par un premier niveau (N1) et un second niveau (N2) d'enregistrement.

9. Dispositif d'enregistrement optique, comprenant :

   - un support d'enregistrement avec un premier niveau d'enregistrement (N1) et un second niveau d'enregistrement (N2) superposé au premier,
   - des moyens (54) pour éclairer lesdits premier et second niveaux (N1, N2), le second niveau d'enregistrement (N2) étant éclairé à travers le premier (N1),
   - des moyens de lecture (56, 58, 60-1, 60-2) aptes à recevoir la lumière réfléchie par le premier niveau (N1) et par le second niveau (N2), ces moyens comprenant au moins deux photorécepteurs, un premier canal (60-1) apte à former la différence (Sd) des signaux délivrés par les photorécepteurs et un second canal (60-2) apte à former la somme (Ss) des signaux délivrés par les détecteurs,

   **caractérisé par le fait que** la lecture du premier niveau (N1) est fondée sur le principe d'une modulation de phase du faisceau réfléchi. (Fr1), le premier canal (60-1) délivrant le signal différentiel (Sd) restituant l'information enregistrée dans ce premier niveau (N1) et **par le fait que** la lecture du second niveau (N2) est fondée sur le principe d'une modulation d'intensité du faisceau réfléchi (Fr2), le second canal (60-2) délivrant le signal somme (Ss) restituant l'information enregistrée dans ce second niveau (N2).

**10.** Procédé de lecture d'un support d'enregistrement optique comprenant un premier niveau d'enregistrement (N1) et un second niveau d'enregistrement (N2) superposé au premier, dans lequel on lit ces deux niveaux par un même faisceau optique, ce faisceau se trouvant modulé par chaque niveau, la lecture des deux niveaux étant fondée sur deux types de modulation différentes, **caractérisé par le fait que** la lecture du premier niveau (N1) est fondée sur une modulation de phase du faisceau et que la lecture du second niveau (N2) est fondée sur une modulation d'intensité du faisceau.

**Patentansprüche**

**1.** Optisches Aufzeichnungsmedium mit einem ersten Aufzeichnungsniveau (N1) und einem über dem ersten angeordneten zweiten Aufzeichnungsniveau (N2) und Leseeinrichtungen dieser beiden Niveaus mit Hilfe eines selben optischen Strahls aber mittels unterschiedlicher Prinzipien,
**dadurch gekennzeichnet, dass** das Lesen des ersten Niveaus (N1) auf dem Prinzip einer Phasenmodulation des optischen Strahls beruht und das Lesen des zweiten Niveaus (N2) auf dem Prinzip einer Intensitätsmodulation dieses optischen Strahls.

**2.** Optisches Aufzeichnungsmedium nach Anspruch 1, bei dem das erste Niveau (N1) und das zweite Niveau (N2) eine aktive Schicht des Phasenumwandlungs- bzw.-übergangstyps umfassen.

**3.** Optisches Aufzeichnungsmedium nach Anspruch 1, bei dem das erste Niveau (N1) und das zweite Niveau (N2) eine aktive Schicht des magnetooptischen Typs umfassen.

**4.** Optisches Aufzeichnungsmedium nach Anspruch 1, bei dem jedes Aufzeichnungsniveau (N1, N2) eine aktive Schicht (74) zwischen zwei dielektrischen Schichten (72, 76) umfasst.

**5.** Optisches Aufzeichnungsmedium nach Anspruch 1, bei dem die beiden Aufzeichnungsniveaus (N1, N2) durch eine transparente Abstandsschicht (51) getrennt sind.

**6.** Optisches Aufzeichnungsmedium nach Anspruch 1, bei dem das erste Aufzeichnungsniveau (N1) auf einem transparenten Substrat (50) ruht.

**7.** Optisches Aufzeichnungsmedium nach Anspruch 1, bei dem das zweite Aufzeichnungsniveau (N2) mit einer reflektierenden Schicht (52) überzogen ist.

**8.** Optisches Aufzeichnungsmedium nach einem der Ansprüche 1 bis 7, ein Substrat (50) mit zwei Flächen umfassend, wobei jede Fläche mit einem ersten Niveau (N1) und einem zweiten Niveau (N2) überzogen ist.

**9.** Optische Aufzeichnungsvorrichtung, umfassend:

- ein Aufzeichnungsmedium mit einem ersten Aufzeichnungsniveau (N1) und einem über dem ersten angeordneten zweiten Aufzeichnungsniveau (N2),
- Einrichtungen (54), um die genannten Aufzeichnungsniveaus (N1, N2) zu beleuchten, wobei das zweite Aufzeichnungsniveau (N2) durch das erste (N1) hindurch beleuchtet wird,
- Leseeinrichtungen (56, 58, 60-1, 60-2), fähig das durch das erste Niveau (N1) und durch das Zweite Niveau (N2) reflektierte Licht zu empfangen, wobei diese Einrichtungen wenigstens zwei Fotorezeptoren, einen ersten Kanal (60-1) zur Bildung der Differenz (Sd) der durch die Fotorezeptoren gelieferten Signale und einen zweiten Kanal (60-2) zur Bildung der Summe (Ss) der durch die Detektoren gelieferten Signale umfassen,

**dadurch gekennzeichnet, dass** das Lesen des ersten Niveaus (N1) auf dem Prinzip einer Phasenmodulation des reflektierten Strahls (Fr1) beruht, wobei der erste Kanal (60-1) das Differenzsignal (Sd) liefert, das die in dem ersten Niveau (N1) aufgezeichnete Information wiedergibt, und dadurch, dass das Lesen des zweiten Niveaus (N2) auf dem Prinzip einer Intensitätsmodulation des reflektierten Strahls (Fr2) beruht, wobei der zweite Kanal (60-2) das Summensignal (Ss) liefert, das die in dem zweiten Niveau (N2) aufgezeichnete Information wiedergibt.

**10.** Verfahren zum Lesen eines Aufzeichnungsmediums mit einem ersten Aufzeichnungsniveau (N1) und einem über dem ersten angeordneten zweiten Aufzeichnungsniveau (N2), bei dem man diese beiden Niveaus mittels eines selben optischen Strahls liest, wobei dieser Strahl durch jedes Niveau moduliert wird und das Lesen der beiden Niveaus dabei auf zwei unterschiedlichen Modulationsarten beruht,
**dadurch gekennzeichnet, dass** das Lesen des ersten Niveaus (N1) auf einer Phasenmodulation des Strahls beruht und das Lesen des zweiten Niveaus (N2) auf einer Intensitätsmodulation dieses Strahls.

## Claims

1. Optical recording medium, comprising a first recording level (N1) and a second recording level (N2) superimposed on the first, and means for reading said two levels by the same optical beam, but based on different principles, **characterized in that** the reading of the first level (N1) is based on the principle of a phase modulation of the optical beam and the reading of the second level (N2) is based on the principle of an intensity modulation of said optical beam.

2. Recording medium according to claim 1, wherein the first recording level (N1) and second recording level (N2) comprise an active film of the phase change type.

3. Recording medium according to claim 1, wherein the first recording level (N1) and second recording level (N2) comprise an active film of the magnetooptical type.

4. Recording medium according to claim 1, wherein each recording level (N1, N2) comprises an active film (74) framed by two dielectric films (72, 76).

5. Recording medium according to claim 1, wherein the two recording levels (N1, N2) are separated by a transparent spacer (51).

6. Recording medium according to claim 1, wherein the first recording level (N1) rests on a transparent substrate (50).

7. Recording medium according-to claim 1, wherein the second recording level (N2) is covered by a reflecting film (52).

8. Recording medium according to any one of the claims 1 to 7, comprising a substrate (50) having two faces, each face being covered by a first recording level (N1) and a second recording level (N2).

9. Optical recording device, comprising:

    - a recording medium with a first recording level (N1) and a second recording level (N2) superimposed on the first,
    - means (54) for illuminating said first and second levels (N1, N2), the second recording level (N2) being illuminated through the first (N1),
    - reading means (56, 58, 60-1, 60-2) able to receive the light reflected by the first level (N1) and by the second level (N2), said means incorporating at least two photoreceivers, a first channel (60-1) able to form the difference (Sd) of the signals supplied by the photoreceivers and a second channel (60-2) able to form the sum (Ss) of the signals supplied by the detectors,

    **characterized in that** the reading of the first level (N1) is based on the principle of a phase modulation of the reflected beam (Fr1), the first channel (60-1) supplying the differential signal (Sd) restoring the information recorded in said first level (N1) and **in that** the reading of the second level (N2) is based on the principle of an intensity modulation of the reflected beam (Fr2), the second channel (60-2) supplying the sum signal (Ss) restoring the information recorded in said second level (N2).

10. Process for reading an optical recording medium comprising a first recording level (N1) and a second recording level (N2) superimposed on the first, said two levels being read by the same optical beam, said beam being modulated by each level, the reading of the two levels being based on two different modulation types, **characterized in that** the reading of the first level (N1) is based on a phase modulation of the beam and that the reading of the second level (N2) is based on an intensity modulation of the beam.

FIG. 1

FIG. 2

FIG. 3

FIG. 4

FIG. 5

FIG. 6

FIG. 7

FIG. 8

FIG. 9

FIG. 10 A

FIG. 10 B